# EUROPEAN PATENT SPECIFICATION

(11) **EP 1 274 797 B1**
(45) Date of publication and mention of the grant of the patent: **06.05.2004**
(21) Application number: 01927734.2
(22) Date of filing: 16.03.2001
(51) Int. Cl.: C08L 67/02

(54) **MODIFIED POLYETHYLENE TEREPHTHALATE**
MODIFIZIERTES POLYETHYLENTEREPHTHALAT
POLYETHYLENE TEREPHTALATE MODIFIE

(30) Priority: 31.03.2000 IT MI000682
(43) Date of publication of application: 15.01.2003
(73) Proprietor: Polimeri Europa S.p.A., 72100 Brindisi (IT)
(72) Inventor: BIGGI, Aroldo, I-20097 San Donato Milanese (IT); TACCIOLI, Attilio, I-20097 San Donato Milanese (IT); MASI, Francesco, I-26866 Sant'Angelo Lodigiano-Lodi (IT)
(74) Representative: De Gregori, Antonella
(86) International application number: PCT/EP2001/002992
(87) International publication number: WO 2001/074945

(56) References cited:
- EP-A- 0 811 661
- WO-A-86/04076

## Description

The present invention relates to polyethylene terephthalate modified with rubbers essentially consisting of polyvinylarene/conjugated polydiene block copolymers.

In various industrial applications of polyethylene terephthalate (PET) (for example in the field of fine plates), the ever-increasing necessity is felt for improving the properties of PET, in particular the impact strength, shock resistance and processability, without reducing some of the properties of polyester, such as transparency.

For this purpose the market has resorted to various types of polyester characterized by high costs and low productive capacities installed, or to the use of PET modifiers.

Recently, in fact, two chemical groups of PET modifiers, extremely different from each other, have appeared: the first consists of elastoplastic copolymers based on functionalized polyolefins, the second of copolymers with a core-shell structure based on MBS (methacrylate-butadiene-styrene) rubber (core) and functionalized acrylic copolymers (shell).

The former offer, at a convenient price with respect to the use of other polyesters, the possibility of modifying PET without however conserving its transparency, the latter maintain the transparency of PET but are off-market from the point of view of economic convenience and are inferior to the former as impact modifiers of PET.

A modified polyethylene terephthalate has now been found which overcomes the disadvantages described above.

In accordance with this, the present invention relates to a modified polyethylene terephthalate which comprises:
(a) polyethylene terephthalate in a quantity ranging from 80% to 99.5%, preferably from 85% to 98%, even more preferably from 95% to 97%;
(b) functionalized rubber in a quantity ranging from 20% to 0.5%, preferably from 15% to 2%, even more preferably from 5% to 3%; the above functionalized rubber (b) being selected from polyvinylarene/conjugated polydiene block copolymers functionalized with an unsaturated epoxide having general formula (I) 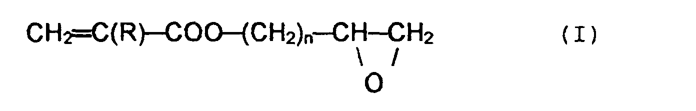
wherein R is selected from H and CH₃, n is an integer from 0 to 4, R is preferably CH₃ and n = 1. In the latter case, the unsaturated epoxide (I) is glycidyl methacrylate (GMA).

Polyethyleneterephthalate (PET) is the polymer deriving from polycondensation (esterification) between terephthalic acid and ethylene glycol. In the present invention recycled PET deriving from bottles recovery, was used.

Block copolymers consist of a hard phase and a soft phase. The hard phase usually consists of a polyvinylarene, preferably polystyrene, whereas the soft phase normally consists of a polydiolefin, preferably selected from polybutadiene and polyisoprene. These block copolymers can be sequentially ordered (linear) or branched (star), with a number of blocks normally ranging from 2 to 4 and a varying number of branches. The blocks, and also those which are repeated, can have a different molecular weight. In any case, the total molecular weights range from 70,000 to 250,000. In the preferred embodiment, the block copolymers are styrene/butadiene/styrene block copolymers, also known as SBS rubber.

The block copolymers are functionalized with an acrylate having general formula (I), preferably with the acrylate having general formula (I) wherein R=CH₃, n=1, or glycidyl methacrylate. In the preferred embodiment, the block copolymers are functionalized with a quantity of acrylate having general formula (I) ranging from 0.2% to 6% by weight, even more preferably from 1% by weight to 3% by weight.

A further object of the present invention relates to a process for the preparation of modified PET which comprises:
(i) a first extrusion of a mixture essentially consisting of (a) one or more elastomers selected from polyvinylarene/conjugated polydiene block copolymers, preferably a styrene-butadiene-styrene block copolymer, and (b) an unsaturated epoxide having general formula (I), preferably glycidyl methacrylate, at a temperature ranging from 180°C to 220°C, preferably from 195°C to 205°C, thus obtaining a functionalized rubber (c);
(ii) a second extrusion under vacuum of a mixture essentially consisting of PET and the functionalized rubber (c) obtained in step (i), at a temperature ranging from 260°C to 300°C, preferably from 270°C to 290°C, thus obtaining modified PET;
(iii) recovery of the modified PET obtained in step (ii).

All the materials are preferably as damp-free as possible. It is therefore advisable to effect a pretreatment of the materials, in particular of the PET and rubber, in order to eliminate any humidity possibly present in the above products.

In the preferred embodiment, in order to obtain a homogeneous functionalized rubber, it is preferable to carry out a preliminary mixing step of the acrylate (b) and rubber (a), thus obtaining an optimum dispersion of the acrylate in the rubber.

In step (i), a functionalized rubber is obtained by the grafting of the epoxide on the rubber itself. The grafting of the epoxide in the rubber presumably takes place by means of radicalic reaction.

In step (ii), a second extrusion of the mixture, essentially consisting of PET and functionalized rubber, is carried out, thus obtaining the modified PET of the present invention. In this second step an ionic reaction between the PET ester groups and the epoxide groups of formula (I) presumably takes place.

It should be pointed out that the conditions of the two different extrusions (i) and (ii) are critical in that the first extrusion should be carried out at a lower temperature than the second.

As can be seen from the following experimental tests, the modified PET obtained according to the process of the present invention has, with respect to PET as such, a distinctly improved shock resistance and above all impact strength, without there being a substantial loss in the optical characteristics typical of PET as such.

Furthermore the modified PET of the present invention has a decisively higher processability than PET as such.

All these properties of modified PET can be conveniently exploited in the preparation of various kinds of materials, particularly in the preparation of fine transparent plates.

The following examples are provided for a better understanding of the present invention.

### EXAMPLES

The polyethylene terephthalate used is a recycled PET characterized by a number molecular weight (Mn) of about 25,000.

SOL S 142® is a block copolymer (SBC) of the SBS (styrene-butadiene-styrene) family having the following characteristics:
Number molecular weight (Mn) equal to 75,000; 70% by weight of styrene of which 50% forms polystyrene blocks (hard phase) and the remaining styrene alternates with butadiene (30% by weight) forming the soft phase.

### Preparation of modified PET

The preparation of the modified PET of the present invention is effected in two steps: (a) grafting of the GMA onto the block copolymer, thus obtaining modified rubber; (b) extrusion of PET and the modified rubber obtained in step (a).

A dispersion of GMA in the previously dried rubber (ventilation oven at 50°C for 6 hours) is carried out before step (a), followed by a subsequent "digestion" initially using a fast mill for 5 minutes at a low temperature and subsequently a drum-rotator for 24 hours. The purpose of this treatment is to obtain an optimum dispersion of the GMA and absorb it onto the rubber granules.

The first step (a) consists in "reactive blending" with grafting of the GMA onto the rubber. The dispersion of GMA in the rubber is charged into a weigher situated on the first inlet of the laboratory twin-screw extruder characterized by a screw having a diameter of 35 mm with l/d equal to 32, under the following conditions:
*** thermal profile: 200°C are set in the first half of the screw length, whereas in the second half the temperature gradually drops to 120°C at the head of the extruder;
*** flow-rate 2.5 kg/h;
*** screw revs of 200/min.

Under these conditions the machine allows a contact time (machine holdup) of the materials (rubber and GMA) of about 160 seconds.

Three different compositions of modified rubber containing respectively 1%, 2% and 3% by weight of GMA were prepared with the process described above.

The second step (b) of the process of the present invention consists in the extrusion of the modified rubber of step (a) and PET. The modified rubber and PET are charged into two different weighers situated at the first inlet of the laboratory twin-screw extruder characterized by a screw having a diameter of 35 mm with l/d equal to 32, under the following conditions:
*** thermal profile: 280°C are set in the first half of the screw length, whereas in the second half the temperature gradually drops to 250°C at the head of the extruder;
*** flow-rate 11 kg/h;
*** screw revs of 300/min;
*** extrusion carried out under vacuum.

Under these conditions, the machine allows a contact time (machine holdup) of the materials (modified rubber and GMA) of about 35 seconds.

The different percentage compositions of the various tests indicated hereunder were obtained by varying the percentage flow-rate of the single percentage weighers, so as to obtain compositions in which the rubbers used are present at 3, 5 and 15% by weight.

The characteristics of the various modified PET obtained are specified in Table 1.

All the modified PET obtained have a combination of characteristics which are better than those expected. All the examples described generally show improvements with respect to the starting PET, but the best results are obtained with low levels (from 3% to 5%) of Sol 142 modified with a weight quantity of GMA ranging from 1 to 3% by weight.

This unexpected improvement consists in the fact that the characteristics which were expected to improve are all in all better than expected, without there being any significant losses in the PET properties (modulus and transparency).
In particular:
1) the shock resistance properties (charpy and izod without notch) are much higher than PET as such (over ten times higher) and, even if to a lesser degree, the izod with notch is also improved;
2) there is an incredible increase in the ultimate elongation (from 50 to 100 times);
3) the impact strength of the material is also 50-100 times higher than that of PET;
4) the modulus and transmittance of the material are not particularly influenced by the rubber, above all in the optimum quantity (3%-5%); there is a slight deterioration in the haze.

The processability of the materials was evaluated, not only by observation (both in the extrustion and "stretching" phase of the extruded products and in the injection moulding phase of 3.2 mm thick test samples) but also by means of standard deviation measurements of the average viscosities of the products under injection moulding conditions (the result is automatically provided by the injection press).

In both cases there is a distinct improvement, on the one hand in the greater regularity of the geometry of the moulded test samples and in the high reduction in mould detaching problems, and on the other, in the standard deviation value of the viscosities which increases 5 times, going from the mixture with 5% of rubber containing 2% of GMA to PET as such, whereas the viscosity values are similar.

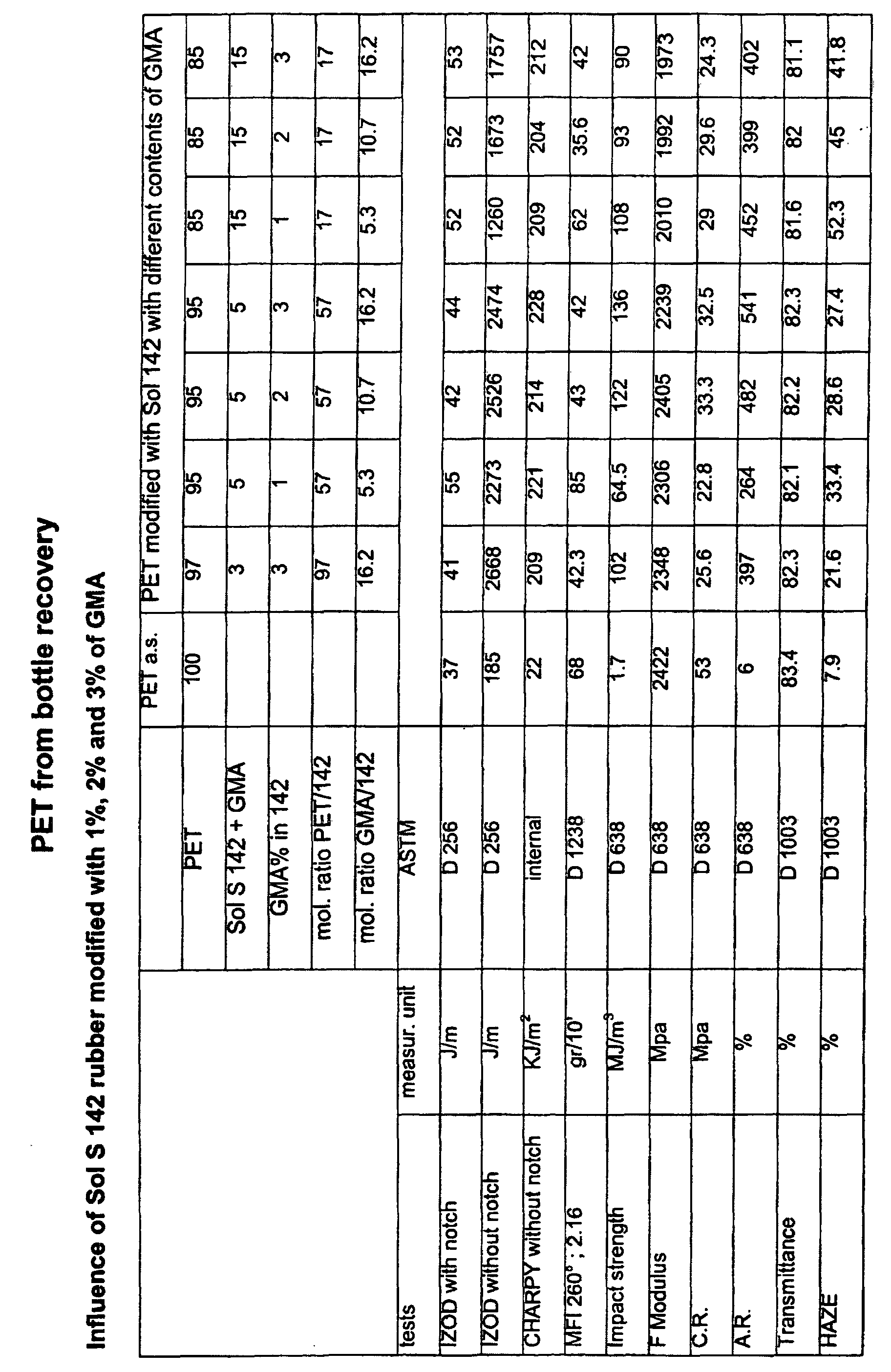

## Claims

1. Modified polyethylene terephthalate which comprises:
(a) polyethylene terephthalate in a quantity ranging from 80% to 99.5%;
(b) functionalized rubber in a quantity ranging from 20% to 0.5%;
the above functionalized rubber (b) being selected from polyvinylarene/conjugated polydiene block copolymers functionalized with an unsaturated epoxide having general formula (I) 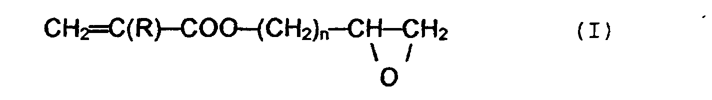 wherein R is selected from H and CH₃, n is an integer from 0 to 4.

2. The modified polyethylene terephthalate according to claim 1, which comprises:
(a) polyethylene terephthalate in a quantity ranging from 85% to 98%;
(b) functionalized rubber in a quantity ranging from 15% to 2%.

3. The modified polyethylene terephthalate according to claim 2, which comprises:
(a) polyethylene terephthalate in a quantity ranging from 95% to 97%;
(b) functionalized rubber in a quantity ranging from 5% to 3%.

4. The modified polyethylene terephthalate according to claim 1, wherein the functionalized rubber (b) is selected from polystyrene/polybutadiene/polystyrene block copolymers.

5. The modified polyethylene terephthalate according to claim 1, wherein in the epoxide having general formula (I), R is CH₃ and n = 1.

6. The modified polyethylene terephthalate according to claim 1, wherein the block copolymers are functionalized with a quantity of epoxide having general formula (I) ranging from 0.2% by weight to 6% by weight.

7. The modified polyethylene terephthalate according to claim 6, wherein the block copolymers are functionalized with a quantity of acrylate having general formula (I) ranging from 1% by weight to 3% by weight.

8. A process for the preparation of modified PET according to claim 1, which comprises:
(i) a first extrusion of a mixture essentially consisting of (a) one or more elastomers selected from polyvinylarene/conjugated polydiene block copolymers, and (b) an unsaturated epoxide having general formula (I, at a temperature ranging from 180°C to 220°C, thus obtaining a functionalized rubber (c);
(ii) a second extrusion under vacuum of a mixture essentially consisting of PET and the functionalized rubber (c) obtained in step (i), at a temperature ranging from 260°C to 300°C, thus obtaining modified PET;
(iii) recovery of the modified PET obtained in step (ii).

9. The process according to claim 8, **characterized in that** the elastomers are selected from styrene-butadiene-styrene block copolymers.

10. The process according to claim 8, **characterized in that** the unsaturated epoxide having general formula (I) is glycidyl methacrylate.

11. The process according to claim 8, **characterized in that** the first extrusion is carried out at a temperature ranging from 195°C to 205°C.

12. The process according to claim 8, **characterized in that** the second extrusion is carried out at a temperature ranging from 270°C to 290°C.

## Patentansprüche

1. Modifiziertes Polyethylenterephthalat umfassend:
(a) Polyethylenterephthalat in einer Menge im Bereich von 80 % bis 99,5 %;
(b) funktionalisierten Gummi in einer Menge im Bereich von 20 % bis 0,5 %;
wobei der vorstehende funktionalisierte Gummi (b) aus Polyvinylaren/konjugiertes Polydien-Blockcopolymeren ausgewählt ist, die mit einem ungesättigten Epoxid der allgemeinen Formel (I) funktionalisiert sind 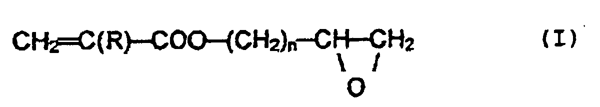 worin R aus H und CH₃ ausgewählt ist, n für eine ganze Zahl von 0 bis 4 steht.

2. Das modifizierte Polyethylenterephthalat gemäß Anspruch 1, umfassend:
(a) Polyethylenterephthalat in einer Menge im Bereich von 85 % bis 98 %;
(b) funktionalisierten Gummi in einer Menge im Bereich von 15 % bis 2 %.

3. Das modifizierte Polyethylenterephthalat gemäß Anspruch 2, umfassend:
(a) Polyethylenterephthalat in einer Menge im Bereich von 95 % bis 97 %;
(b) funktionalisierten Gummi in einer Menge im Bereich von 5 % bis 3 %.

4. Das modifizierte Polyethylenterephthalat gemäß Anspruch 1, worin der funktionalisierte Gummi (b) aus Polystyrol/Polybutadien/Polystyrol-Blockcopolymeren ausgewählt ist.

5. Das modifizierte Polyethylenterephthalat gemäß Anspruch 1, worin in dem Epoxid der allgemeinen Formel (I) R für CH₃ steht und n = 1.

6. Das modifizierte Polyethylenterephthalat gemäß Anspruch 1, worin die Blockcopolymeren mit einer Menge an Epoxid der allgemeinen Formel (I) im Bereich von 0,2 Gew.-% bis 6 Gew.-% funktionalisiert sind.

7. Das modifizierte Polyethylenterephthalat gemäß Anspruch 6, worin die Blockcopolymeren mit einer Menge an Acrylat der allgemeinen Formel (I) im Bereich von 1 Gew.-% bis 3 Gew.-% funktionalisiert sind.

8. Ein Verfahren zur Herstellung von modifiziertem PET gemäß Anspruch 1, das folgendes umfasst:
(i) eine erste Extrusion einer Mischung, die im wesentlichen aus (a) einem oder mehreren Elastomeren, die aus Polyvinylaren/konjugiertes Polydien-Blockcopolymeren ausgewählt sind, und (b) einem ungesättigten Epoxid der allgemeinen Formel (I) besteht, bei einer Temperatur im Bereich von 180°C bis 220°C, wodurch ein funktionalisierter Gummi (c) erhalten wird;
(ii) eine zweite Extrusion unter Vakuum einer Mischung, die im wesentlichen aus PET und dem in Schritt (i) erhaltenen funktionalisierten Gummi besteht, bei einer Temperatur im Bereich von 260°C bis 300°C; wodurch modifiziertes PET erhalten wird; und
(iii) Gewinnen des in Schritt (ii). erhaltenen modifizierten PET.

9. Das Verfahren gemäß Anspruch 8, **dadurch gekennzeichnet, dass** die Elastomere aus Styrol-Butadien-Styrol-Blockcopolymeren ausgewählt sind.

10. Das Verfahren gemäß Anspruch 8, **dadurch gekennzeichnet, dass** das ungesättigte Epoxid der allgemeinen Formel (I) Glycidylmethacrylat ist.

11. Das Verfahren gemäß Anspruch 8, **dadurch gekennzeichnet, dass** die erste Extrusion bei einer Temperatur im Bereich von 195°C bis 205°C durchgeführt wird.

12. Das Verfahren gemäß Anspruch 8, **dadurch gekennzeichnet, dass** die zweite Extrusion bei einer Temperatur im Bereich von 270°C bis 290°C durchgeführt wird.

## Revendications

1. Polyéthylène téréphtalate modifié comprenant :
(a) du polyéthylène téréphtalate dans une quantité allant de 80% à 99,5% ;
(b) du caoutchouc fonctionnalisé dans une quantité allant de 20% à 0,5% ;
le caoutchouc fonctionnalisé (b) ci-dessus étant choisi parmi des copolymères à blocs polyvinylarène / polydiène conjugué fonctionnalisés avec un époxyde insaturé ayant la formule générale (I) 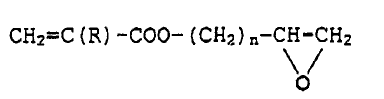 dans laquelle R est choisi parmi H et CH₃, n est un entier entre 0 et 4.

2. Polyéthylène téréphtalate modifié selon la revendication 1, comprenant :
(a) du polyéthylène téréphtalate dans une quantité allant de 85% à 98% ;
(b) du caoutchouc fonctionnalisé dans une quantité allant de 15% à 2%

3. Polyéthylène téréphtalate modifié selon la revendication 2, comprenant :
(a) du polyéthylène téréphtalate dans une quantité allant de 95% à 97% ;
(b) du caoutchouc fonctionnalisé dans une quantité allant de 5% à 3% ;

4. Polyéthylène téréphtalate modifié selon la revendication 1, dans lequel le caoutchouc fonctionnalisé (b) est choisi parmi les copolymères à blocs polystyrène / polybutadiène / polystyrène.

5. Polyéthylène téréphtalate modifié selon la revendication 1, dans lequel dans l'époxyde ayant la formule générale (I), R est CH₃ et n=1.

6. Polyéthylène téréphtalate modifié selon la revendication 1, dans lequel les copolymères à blocs sont fonctionnalisés avec une quantité d'époxyde ayant la formule générale (I) allant de 0,2% en poids à 6% en poids.

7. Polyéthylène téréphtalate modifié selon la revendication 6, dans lequel les copolymères à blocs sont fonctionnalisés avec une quantité d'acrylate ayant la formule générale (I) allant de 1% en poids à 3% en poids.

8. Procédé pour la préparation de PET modifié selon la revendication 1, comprenant :
(i) une première extrusion d'un mélange consistant essentiellement en (a) un ou plusieurs élastomères choisis parmi les copolymères à blocs polyvinylarène / polydiène conjugué, et en (b) un époxyde insaturé ayant la formule générale (I), à une température allant de 180°C à 220°C, obtenant ainsi un caoutchouc fonctionnalisé (c) ;
(ii) une deuxième extrusion sous vide d'un mélange consistant essentiellement de PET et de caoutchouc fonctionnalisé (c) obtenu à l'étape (i), à une température allant de 260°C à 300°C, obtenant ainsi un PET modifié ;
(iii) récupération du PET modifié obtenu à l'étape (ii).

9. Procédé selon la revendication 8, **caractérisé en ce que** les élastomères sont choisis parmi les copolymères à blocs styrène-butadiène-styrène.

10. Procédé selon la revendication 8, **caractérisé en ce que** l'époxyde insaturé ayant la formule générale (I) est le méthacrylate de glycidyle.

11. Procédé selon la revendication 8, **caractérisé en ce que** la première extrusion est effectuée à une température allant de 195°C à 205°C.

12. Procédé selon la revendication 8, **caractérisé en ce que** la deuxième extrusion est effectuée à une température allant de 270°C à 290°C.
